(19) Europäisches Patentamt
European Patent Office
Office européen des brevets

(11) Publication number: 0 603 965 A2

(12) # EUROPEAN PATENT APPLICATION

(21) Application number: 93203597.5

(51) Int. Cl.5: C08F 293/00

(22) Date of filing: 20.12.93

(30) Priority: 21.12.92 US 994152

(43) Date of publication of application:
29.06.94 Bulletin 94/26

(84) Designated Contracting States:
BE DE FR GB IT NL

(71) Applicant: SHELL INTERNATIONALE RESEARCH MAATSCHAPPIJ B.V.
Carel van Bylandtlaan 30
NL-2596 HR Den Haag(NL)

(72) Inventor: Sutherland, Robert Jude
16211 Cairngorm Avenue
Houston, Texas 77095(US)
Inventor: Dubois, Donn Anthony
14310 Cindywood
Houston, Texas 77079(US)

(54) **Modified block copolymers and process for the preparation thereof.**

(57) The modified block copolymers can be prepared by heating the anionically polymerized base block copolymers to a temperature between 170 and 260 °C in the presence of a primary or secondary amine to convert the polymerized ester to amide and imide groups.

EP 0 603 965 A2

This invention relates to modified block copolymers and to a process for the preparation thereof. More specifically, the present invention relates to block copolymers comprising at least one polyester block which has been modified to contain amide or imide groups and to a process for preparing such block copolymers.

US-A-4,246,374 discloses polymers containing imide units prepared by reacting acrylic polymers with ammonia or a primary amine under substantially anhydrous conditions in an extruder at a temperature between 200 and 450 °C, while in the working examples actual conversion temperatures of from 260 to 310 °C are applied. No imidized acrylate block copolymers containing conjugated diene and/or vinyl aromatic polymer blocks are disclosed. At such high conversion temperatures as disclosed in US-A-4,246,374 butadiene or isoprene units in a polymer are generally expected to thermally degrade at least partly. Accordingly, a possible imidization reaction of acrylate-conjugated diene block copolymers should not take place at temperatures too much in excess of 260 °C and certainly not at temperatures above 300 °C, as it would be expected that the conjugated diene blocks would be seriously affected by such high temperatures, thus resulting in a product having inferior properties. On the other hand, the imidization cannot be performed at a too low temperature, i.e. below 170 °C, as in such a case the reaction would proceed too slowly and the polymer would hardly be processable.

It is an object of the present invention to provide a linear or branched block copolymer comprising at least one polyester block modified to contain amide or imide groups and at least one other polymer block. More specifically, it is an object of the present invention to provide a linear or branched block copolymer comprising at least one polyester block modified to contain amide or imide groups and at least one polymer block derived from a conjugated diene and/or at least one polymer block derived from a monovinyl aromatic compound.

It is a further object of the present invention to provide an effective method for preparing such modified block copolymers.

Accordingly, the present invention relates to a modified block copolymer comprising at least one polymer block derived from a (1,1-disubstituted)alkyl ester of an unsaturated carboxylic acid, preferably a monocarboxylic acid, and at least one polymer block derived from a conjugated diene and/or at least one polymer block derived from a monovinyl aromatic compound, which block copolymer has been modified in the polyester blocks to contain amide or imide groups.

The modified block copolymer of the present invention preferably comprises at least one polymer block derived from a conjugated diene. In an even more preferred embodiment all poly(conjugated diene) blocks present in the block copolymer are hydrogenated.

The modified block copolymer of the present invention may have a linear or branched structure, depending on the structure of the unmodified base polymers from which they are prepared. The base polymer may have any one of the following structures:

A—M (I)

B—M (II)

A—M—A (III)

B—M—B (IV)

M—B—M (V)

$(B—M—)_y—X$ (VI)

$(M—B—)_y—Z$ (VII)

A—B—M (VIII)

B—A—M (IX)

A—B—A—M (X)

B—A—B—M (XI)

A—B—A—B—M (XII)

M—B—A—M (XIII)

(A—B—M—)$_y$X (XIV)

(M—A—B)$_y$Z (XV)

(M—B—A-)$_y$-Z (XVI)

(C—)$_t$—Z—(—M)$_s$ (XVII)

wherein each A is a block or segment comprising a preponderance, i.e. at least 80% by weight and preferably at least 90% by weight, of a polymerized monovinyl aromatic compound; each B is a block or segment comprising a preponderance of a polymerized conjugated diene; C is a polymeric arm which may be A—, B—, A—B— or B—A— with A and B as defined before; each M is a segment or block derived from polymerized (1,1-disubstituted)alkyl ester of an unsaturated carboxylic acid; y, s and t are integers representing multiple arms in a star configuration wherein $y \geqq 2$, $s \geqq 3$ and $t \geqq 3$; X is the residue of a polyfunctional coupling agent, and Z is a cross-linked core of a polyfunctional coupling agent or a polyfunctional polymerization initiator. It is preferred that A and B are homopolymeric blocks.

The monovinyl aromatic compound employed as each A block or segment in the above structures is a hydrocarbon compound of up to 18 carbon atoms having a vinyl group attached to the aromatic ring. Examples of suitable monovinyl aromatic compounds are styrene, α-methylstyrene, p-methylstyrene, and α,4-dimethylstyrene. Styrene, p-methylstyrene, and α-methylstyrene are preferred while styrene is particularly preferred.

Suitable conjugated dienes preferably have up to 8 carbon atoms. Illustrative of such conjugated dienes are 1,3-butadiene (butadiene), 2-methyl-1,3-butadiene (isoprene), 1,3-pentadiene (piperylene), 1,3-octadiene, and 2-methyl-1,3-pentadiene. Preferred conjugated dienes are butadiene and isoprene.

Within the preferred B blocks or segments, the percentage of units produced by 1,4 polymerization is at least 5% and preferably at least 20%.

Each M is preferably block or segment comprising at least two adjacent units of a polymerized (1,1-disubstituted)alkyl ester of an unsaturated carboxylic acid.

Preferred (1,1-disubstituted)alkyl esters have the following structure:

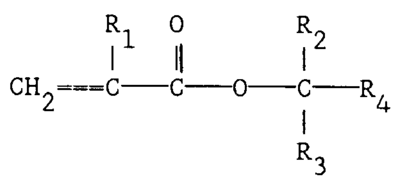

wherein $R_1$ is hydrogen or an alkyl or aromatic group having from 1 to 10 carbon atoms, $R_2$ and $R_3$ independently represent an alkyl group having 1 to 10 carbon atoms and $R_4$ is either an alkyl group having 1 to 10 carbon atoms or an aryl, alkyl-substituted aryl or alkoxy-substituted group having from 6 to 15 carbon atoms.

The preferred esters are the methacrylates, i.e. those wherein $R_1$, $R_2$ and $R_3$ all represent a methyl group. Preferred methacrylates are those wherein $R_4$ represents an alkyl group having 1 to 10, more preferably 1 to 4, carbon atoms. The most preferred ester is the one wherein $R_1$, $R_2$, $R_3$ and $R_4$ all represent a methyl group, i.e. t-butylmethacrylate.

It is most preferred that $R_2$ and $R_3$ are methyl, since both $R_2$ and $R_3$ are removed from the polymer upon conversion of adjacent ester groups to amide or imide groups and selection of methyl groups results in a volatile by-product that is easily removed from the polymer.

Specific examples of suitable esters include acrylates, such as e.g.
1,1-dimethylethylacrylate (t-butylacrylate),
1,1-dimethylpropylacrylate (t-pentylacrylate),
1,1-dimethylethyl-α-propylacrylate,
1-methyl-1-ethylpropyl-α-butylacrylate,
1,1-dimethylbutyl-α-phenylacrylate,
1,1-dimethylpropyl-α-phenylacrylate

(t-pentylatropate),
1,1-dimethylethyl-α-methylacrylate,
(t-butylmethylacrylate), and
1,1-dimethylpropyl-α-methylacrylate.

Examples of the preferred group of methacrylates include:
1,1-dimethylethyl-α-ethacrylate,
(t-butylmethacrylate), and
1,1-dimethylpropyl-α-methacrylate.

Mixtures of (1,1-disubstituted)alkyl esters with other esters, which can not be readily converted to amide or imide groups, such as e.g. isobutylmethylacrylate (3-methylpropyl-α-methylacrylate),can be used if M blocks having both ester and amide or imide functional groups are desired. Alternatively, the amine stoichiometry, reaction temperature, and residence time can be reduced to afford a mixed block of unreacted ester and amide or imide groups. In addition, reaction conditions can be varied to afford mixed blocks of anhydride and amide or imide groups.

The molecular weight of each of the individual polymer blocks is not particularly critical.

Generally, each B segment or block has a molecular weight from 2,000 to 500,000 prior to any coupling, preferably from 2,000 to 200,000. Each A block has a molecular weight from 500 to 30,000 prior to any coupling, preferably from 1,000 to 20,000. Each non-coupled M segment or block has a molecular weight from 300 to 100,000, preferably from 300 to 30,000, prior to conversion to an anhydride.

The present invention also relates to a process for preparing a modified block copolymer comprising the subsequent steps of:

(a) anionically polymerizing a conjugated diene and/or a monovinyl aromatic compound to form living homopolymer or block copolymer molecules;

(b) anionically polymerizing a (1,1-disubstituted)alkyl ester of an unsaturated carboxylic acid to form adjacent units of the ester on the living polymer molecules resulting from step (a); and

(c) reacting the polymerized ester with a primary or secondary amine at a temperature between 170 °C and 300 °C, preferably between 180 and 250 °C, most preferably between 220 and 260 °C.

Anionic polymerization is a generally known concept and involves the polymerization of suitable monomers in the presence of a polymerization initiator in a suitable hydrocarbon solvent. Alkali metal alkyl initiator, and particularly lithium alkyl initiators are commonly applied. A preferred initiator is sec-butyllithium. As the hydrocarbon solvent many inert solvents can be used. Specific examples are pentane, hexane, heptane, cyclopentane, cyclohexane or mixtures of two or more of these solvents. The mode of polymerization of conjugated diene monomers can be determined by adding to the hydrocarbon solvent a polar compound, such as an ether or a tertiary amine. The presence of such polar compound influences the degree of 1,2- or 3,4-polymerization of the conjugated diene. When no polar compound is present the degree of 1,2- or 3,4-polymerization usually ranges from 5 to 10%.

Polymers resulting from about 6% to about 95% of 1,2 polymerization are of particular interest. In the case of 1,4 polymerization, the presence of ethylenic unsaturation in the polymeric chain results in cis and trans configurations. Polymerization to give a cis configuration is predominant. The polymerization suitably takes place at temperatures between 0 and 100 °C, preferably between 10 and 50 °C.

Polymerization of the esters takes place in the solvent containing the living homopolymer or block copolymer at a temperature from -80 °C to 100 °C, preferably from 10 °C to 50 °C.

Subsequent to production of the acrylic block or segment, the polymerization is terminated by either reaction with a protic material, typically an alkanol such as methanol or ethanol, or with a coupling agent, typically dibromomethane or divinylbenzene. Coupling with a polymerizable monomer such as divinylbenzene does not terminate the polymerization reaction.

If at all, coupling with divinylbenzene due to which the living polymer molecules are cross-linked in a star structure, is most suitably realized by adding divinylbenzene after completion of step (a) so that the cross-linking reaction can take place. Subsequently, the process is continued by the addition of the (1,1,-disubstituted)alkyl ester.

The polymers can be recovered by well known procedures such as precipitation or solvent removal.

The polymers produced by the above procedures will undergo some coupling through an ester group on an adjacent living molecule prior to termination unless (1) the living polymer chains are first end-capped with a unit of 1,1-diphenylethylene or α-methylstyrene or (2) the polymer has a star structure wherein the arms containing the methacrylate are shorter than the other polymeric arms. Ester coupling occurs in about 10-50% of the polymer by weight if left unchecked. Such coupling is often acceptable, particularly when the desired polymer structure requires coupling after polymerization of the esters. (Formula III, IV, VI, and XIV.)

The production of the polymers of Formula V and XIII is somewhat different procedurally, although the process technology is broadly old. In this modification, conjugated alkadiene is polymerized in the presence of a difunctional initiator, e.g., 1,3-bis(1-lithio-1,3-dimethylpentyl)benzene, to produce a living polyalkadiene species with two reactive organometallic sites. This polymeric species is then reacted with the remaining monomers to produce the indicated structures.

The production of the polymers of Formula VII, XV, XVI and XVII is also different procedurally, although the process technology again is broadly old. In this modification, a multifunctional initiator identified as core Z is first produced by coupling an alkyl lithium or living polymer molecules with divinylbenzene to provide numerous organometallic sites for further polymerization.

In a preferred modification of the process of the present invention the base polymers containing poly-(conjugated diene) blocks are selectively hydrogenated to reduce the extent of unsaturation in the aliphatic portion of the polymer without substantially reducing the aromatic carbon-carbon unsaturation of any aromatic portion of the block copolymer. Selective hydrogenation should take place before step (c), i.e. before the base block copolymer is reacted with an amine.

In general, a number of catalysts, particularly transition metal catalysts, are capable of selectively hydrogenating the aliphatic unsaturation of a copolymer of an alkenyl aromatic compound and a conjugated alkadiene. The presence of the M segment or block, however, can make the selective hydrogenation more difficult. To selectively hydrogenate the aliphatic unsaturation it is therefore preferred to employ a "homogeneous" catalyst formed from a soluble nickel compound and a trialkylaluminum. Nickel naphthenate and nickel octoate are preferred in this connection. Although this catalyst system is one of the catalysts conventionally employed for selective hydrogenation absent alkyl methacrylate blocks, other "conventional" catalysts are not suitable for selective hydrogenation of the conjugated alkadienes in the ester containing polymers.

In the selective hydrogenation process, the base polymer is reacted in situ, or if isolated is dissolved in a suitable solvent such as cyclohexane or a cyclohexane-ether mixture and the resulting solution is contacted with hydrogen gas in the presence of the before-mentioned homogeneous nickel catalyst. Hydrogenation suitably takes place at temperatures from 25 °C to 150 °C and hydrogen pressures from 2 bar (15 psig) to 69 bar (1000 psig). Hydrogenation is considered to be complete when at least 90%, preferably at least 98%, of the carbon-carbon unsaturation of the aliphatic portion of the base polymer has been saturated. Under the conditions of the selective hydrogenation no more than 10%, and preferably no more than 5%, of the units of the A blocks will have undergone reaction with the hydrogen. The selectively hydrogenated block polymer is recovered by conventional procedures such as washing with aqueous acid to remove catalyst residues and removal of the solvent and other volatile by evaporation or distillation.

The amide and imide groups in the polymers of the invention are produced by heating the base polymers to a temperature between 170 °C and 260 °C in the presence of a primary or secondary amine. Heating is preferably conducted in an extruder having a devolatilization section to remove the volatile by-products formed by conversion of the ester groups to amide or imide groups.

Primary amines are preferred and useful primary amines include compounds having the structure $R-NH_2$ as described in US-A-4,246,374. Octadecylamine is a preferred primary amine, but the most preferred primary amine is N,N-diethylaminopropylamine (DAP). Secondary amines having the structure R'R''-NH will convert the ester groups to amide groups but are not preferred.

The polymers preferably have peak molecular weights between 1,000 and 2,000,000 after conversion to amide and imide groups as measured by gel permeation chromatography.

The amide or imide functionalized polymers of the invention, like the base copolymers, contain polar groups and have utilities conventional for such polymers. The polar polymers are particularly useful in blends with engineering thermoplastics, asphalt compositions, oils, adhesive formulations, including laminating adhesives for flexible packaging, sealants, fibres, and coatings formulations, especially coatings based on water emulsions. Examples of useful products include viscosity index improvers for motor oils and adhesives for tapes, labels, decals, and mastics. The polymers of the invention demonstrate significantly improved resistance to atmospheric hydrolysis in comparison to maleic anhydride modified polymers which have some of the same utilities.

The invention is further illustrated by the following Illustrative Embodiments which should not be construed as limiting.

Example 1

In this example, a selectively hydrogenated base polymer having the structure A-B-A-M was produced by sequential polymerization. Each A is a homopolymer block of styrene having a peak molecular weight of

7,500, B is a hydrogenated homopolymer block of butadiene having a peak molecular weight prior to hydrogenation of 35,000, and M is a block of polymerized t-butylmethacrylate having a peak molecular weight of 5,000. The base polymer contained 30% by weight of coupled polymer having the structure A-B-A-M-A-B-A.

The base polymer was reacted with N,N-diethylaminopropylamine (DAP) in a 15mm twin screw extruder at 240 °C with a residence time of approximately 25 seconds. The DAP was sprayed on the polymer crumb prior to feeding into the extruder. The amount of DAP was maintained at the ratio of 2 mols of the t-butylmethacrylate to each mole of the DAP.

The product was slightly brown in colour and soluble in hexane and tetrahydrofuran. Infrared analysis showed that the main product was the amide derivative of the ester as characterized by an intense absorption at 1669 $cm^{-1}$.

Example 2

Using the same basic experimental procedure described in Example 1, octadecylamine was used in place of DAP at a ratio of 1 mol of octadecylamine per 1 mol of t-butylmethacrylate. After extrusion, the product also showed a strong amide absorption at 1669.5 $cm^{-1}$.

Example 3

This example describes production of a polymer having the structure B-A-M wherein B is hydrogenated polyisoprene, A is polystyrene, and M is poly(t-butylmethacrylate). A two litre Büchi reactor was charged with 1500 ml of cyclohexane at 25 °C and 80 grams of isoprene monomer. Then impurities were titrated with sec-butyllithium. The temperature was increased to 60 °C and 0.6 grams of 12.11 wt% sec BuLi was added to the mixture, and reacted for 30 minutes. Still at 60 °C, 34.3 grams of styrene monomer was added and reacted for 20 minutes. The temperature was decreased to 35 °C and the styrene was reacted for another 20 minutes. Next 2.3 grams of tert-butyl-methacrylate was added at 50 °C and allowed to react for 20 minutes. The reaction was killed with 0.09 ml of methanol prior to hydrogenation.

The polymer solution was then hydrogenated with a nickel catalyst composed of nickel octoate reduced by triethyl aluminium (Al/Ni = 2.3:1). The resulting product showed a 96.9% conversion of double bonds to single bonds in the isoprene block. GPC shows 42% by weight of coupled material (B-A-M-A-B) in the product.

Following hydrogenation, the polymer was melt modified in a Brabender mixing head at 250 °C for 3 minutes in the presence of a slight excess of a 50/50 mixture of oil and DAP. The resulting products showed complete conversion of the alkyl groups on the methacrylate block to amide groups.

Example 4

This example describes production of a polymer having the structure B-A-M wherein B is hydrogenated polyisoprene, A is polystyrene, and M is poly(t-butylmethacrylate). A two litre Büchi reactor was charged with 1500 ml of cyclohexane and 80 grams of isoprene monomer. The stirred solution was titrated with approximately 1 ml of 12.11 wt% sec-butyllithium. After titration the target amount of sec-butyllithium (0.60 grams of 12.11% sec-butyllithium) was added and the isoprene was allowed to polymerize for 1 hour at 45 °C. Then 34.3 grams of styrene monomer was added and allowed to polymerize for 45 minutes, with the temperature being reduced to 25 °C during the styrene polymerization. When the styrene block finished polymerizing 2.3 grams of tert-butylmethacrylate (tBMA) monomer was added and allowed to react for 15 minutes. Then 0.05 ml of methanol was added to kill the reaction.

The polymer solution was then hydrogenated with the nickel catalyst. The resulting product showed a 98.6% conversion of the double bonds in the isoprene block. GPC showed 18% by weight of coupled material (B-A-M-A-B) in the product.

The t-butyl groups on the polymer were acidified in a refluxing toluene solution for 3 hours with a catalytic amount of pTSA. The acidified polymer was then reacted with DAP at a small stoichiometric excess. The amine salt of the polymer was then recovered by precipitation with methanol and dried in a vacuum oven. The amine salt of the polymer was then heated in the Brabender mixing head at 250 °C for 3 minutes to form the amide derivative of the polymer.

Example 5

This example describes production of a base block polymer having the structure (A—B—)$_y$—Z—(-M)$_y$, wherein A is polystyrene, B is hydrogenated poly(isoprene), M is poly(t-butylmethacrylate), and Z is a core of cross-linked divinylbenzene. A first reactor was charged with 122 kg (270 pounds) of cyclohexane and 14 kg (30 pounds) of styrene monomer. To the stirred mixture 3 kg (6.5 pounds) of sec-butyllithium was added and the styrene was polymerized for 10 half-lives at 60 °C.

In a second reactor 124 kg (273 pounds) of cyclohexane and 23 kg (50 pounds) of isoprene monomer were titrated with sec-butyllithium to remove any impurities. Then 12 kg (27 pounds) of the living homopolystyrene from step 1 was added to the isoprene and the isoprene was polymerized for 12 half-lives at 60 °C. Next, 200 ml of divinylbenzene (55% dvb) was added to the living styrene-isoprene polymeric arms and reacted at 80 °C for 30 minutes to form the living star polymer.

The temperature of the star polymer mixture was lowered to 35 °C and 0.54 kg (1.20 pounds) of tert-butylmethacrylate (tBMA) was added to the reaction. The tBMA was polymerized for 30 minutes at 35 °C to form the second polymeric arms, and the reaction was quenched with 19 ml of methanol.

The star polymer of Example 1 was hydrogenated using a catalyst composed of nickel octoate reduced by triethyl aluminium. The ratio of nickel to aluminium for this particular example was 1:2.3. The total catalyst charge was periodically increased to give a product with low residual unsaturation.

Example 6

This example describes production of a base block polymer having the structure (B—)$_y$—Z—(—M)$_y$, wherein B is hydrogenated polyisoprene, M is poly(t-butylmethacrylate), and Z is a core of cross-linked divinylbenzene. A reactor was charged with 12,300 grams of dry cyclohexane and 1,360 grams of isoprene monomer. The cyclohexane and isoprene were titrated with sec-butyllithium to remove impurities, then 26.8 ml of 1.45 M sec-butyllithium was added to polymerize the isoprene. The isoprene was allowed to react for ten half-lives at about 60 °C. Then 32 ml of 55% divinylbenzene was added to couple the star polymer.

A two litre Büchi reactor was charged with 1110 grams of the living star polymer solution. The stirred solution was reacted with 5.7 g of tBMA monomer, dissolved into 21.5 ml of cyclohexane, for 1 hour. The reaction was then quenched with 0.4 ml of methanol.

A second two litre Büchi reactor was charged with 1035 grams of the living polymer solution. The stirred solution was reacted with 5.3 grams of tBMA monomer, dissolved into 20 ml of cyclohexane, for 1 hour. The reaction was quenched with 0.3 ml of methanol. The polymer solutions from both Büchi reactors were then combined and hydrogenated with the nickel catalyst from Example 5 to remove the unsaturation in the polyisoprene blocks.

Example 7

This example describes reaction of the base polymers in Examples 5 and 6 with amines to form amide groups. The conversion of the polymerized t-butylmethacrylate in Examples 5 and 6 to amide groups was carried out in an extruder. For this particular example a Brabender melt mixer was used. The Brabender was heated to 250 °C and 60 grams of polymer was added with the mixing blades at 100 rpm. When the melt was uniformly mixed, a mixture of N,N-diethylaminopropylamine (DAP) and Penrico Oil was added over 3 minutes time (the oil serves to prevent the DAP from vapourizing out of the Brabender before it can mix with the polymer melt). The sample was allowed to mix for 3 minutes longer and then was removed from the Brabender. FT-IR analysis shows conversion to the amide, the ester peak at 1726 $cm^{-1}$ is replaced with an amide peak at 1667 $cm^{-1}$. Analysis by FT-IR revealed that the conversion to amide was at least 80% based on the ratio of carbonyl absorbance to amide carbonyl absorbance.

Example 8

In this example a Carver press (Carver is a trade mark) is used. A Carver press is a device consisting of two parallel metal plates that can be controllably heated and clamped together under pressure. A film consisting of base polymer and reactant (amine) may be "sandwiched" between the plates and forced to react as a melt at predetermined temperatures and reaction times.

The S-EB-S-TBMA polymer described in Example 1 was dissolved in tetrahydrofuran (THF) and DAP so that the mole ratio ester:DAP was 1:3. The THF was allowed to evaporate, thus leaving as a solid the polymer swollen with DAP. Samples of this film were pressed at 200, 225 and 250 °C. The progress of the

melt reaction was determined by FT-IR spectroscopy. The yield was determined by the change in absorbance ratio of the amide/imide bands (1670-1780 $cm^{-1}$) divided by the absorbance of styrene band at 1601$cm^{-1}$. The FT-IR spectrometer, Nicolet 710, has this integration routine built into its software. (Nicolet is a trade mark.)

The results are given in Table I. An absorbance ratio of 3.8 corresponds to full conversion of the ester groups to a mixture of amide/imide groups, while zero absorbance ratio corresponds with zero conversion.

TABLE I Absorbance ratios at different temperatures

| | Absorbance ratio | | |
|---|---|---|---|
| time (min.) | 200 °C | 225 °C | 250 °C |
| 1 | 1.4 | 2.0 | 3.3 |
| 3 | 2.2 | 2.4 | 3.8 |
| 5 | 2.6 | 2.8 | 3.8 |
| 10 | 3.0 | 3.3 | 3.8 |
| 20 | 3.3 | 3.8 | 3.8 |

The results shown in Table I demonstrate that a significant conversion, approximately 85%, can be attained at 200 °C.

## Claims

1. A modified block copolymer comprising at least one polymer block derived from a (1,1-disubstituted)-alkyl ester of an unsaturated carboxylic acid and at least one polymer block derived from a conjugated diene and/or at least one polymer block derived from a monovinyl aromatic compound, which block copolymer has been modified in the polyester blocks to contain amide or imide groups.

2. A modified block copolymer according to claim 1 comprising at least one polymer block derived from a conjugated diene.

3. A modified block copolymer according to claim 2, wherein the at least one polymer block derived from a conjugated diene is hydrogenated.

4. A modified block copolymer according to any one of claims 1 to 3, which block copolymer contains a cross-linked core of a polyfunctional coupling agent.

5. A modified block copolymer according to claim 4, wherein the polyfunctional coupling agent is divinylbenzene.

6. A modified block copolymer according to any one of claims 1 to 5, wherein the (1,1-disubstituted)alkyl ester of an unsaturated carboxylic acid is t-butylmethacrylate.

7. A modified block copolymer according to any one of the preceding claims, wherein the conjugated diene is butadiene or isoprene and the monovinyl aromatic compound is styrene.

8. A process for preparing a modified block copolymer comprising the subsequent steps of:
   (a) anionically polymerizing a conjugated diene and/or a monovinyl aromatic compound to form living homopolymer or block copolymer molecules;
   (b) anionically polymerizing a (1,1-disubstituted) alkyl ester of an unsaturated carboxylic acid to form adjacent units of the ester on the living polymer molecules resulting from step (a); and (c) reacting the polymerized ester with a primary or secondary amine at a temperature between 170 °C and 300 °C.

9. The process of claim 8, wherein step (c) is performed at a temperature between 180 and 260 °C.

**10.** The process of claim 8 or 9, further comprising the step of hydrogenating aliphatic unsaturation in the polymer molecules prior to step (c).

**11.** The process of any one of claims 8 to 10, wherein step (c) is carried out at a temperature between 200 and 260 °C in the presence of a primary amine while passing through an extruder having a devolatilizing section for a sufficient time to achieve substantially complete conversion of the ester groups to amide or imide groups.

**12.** The process of claim 11, wherein the primary amine is N,N-diethylaminopropylamine.

**13.** The process of any one of claims 8 to 12, wherein the living polymer molecules are cross-linked in a star structure by reaction with divinylbenzene after completion of step (a).